# EUROPEAN PATENT APPLICATION

(11) **EP 1 282 028 A2**
(43) Date of publication of application: **05.02.2003**
(21) Application number: 02255059.4
(22) Date of filing: 19.07.2002
(51) Int. Cl.: G06F 1/00

(54) **Method and apparatus for locking an application within a trusted computing environment**

(30) Priority: 31.07.2001 GB 0118574
(71) Applicant: Hewlett-Packard Company, Palo Alto, CA 94304 (US)
(72) Inventor: Chen, Liqun, Bristol BS32 9DQ (GB); Plaquin, David, Bristol BS32 8DT (GB); Stoker, Michael, Bristol BS34 8XT (GB)
(74) Representative: Lawrence, Richard Anthony

(57) **Abstract**

An apparatus for locking an application within a trusted environment comprises a trusted computing platform (10) having a trusted device (12), an application (14), a trusted environment controller (16) and a trusted connection agent (18), the latter communicating for the trusted platform with a user (20) via a secure channel (22). The trusted environment controller (16) is operable to inform the user (20) when the level of trust within the trusted computing platform (10) changes to allow the user (20) to proceed with the process or to abort the process.

## Description

This invention relates to a method for locking an application within a trusted environment and to apparatus for locking an application within a trusted environment.

In the situation where a user wants to use an application on a computing platform for a period of time the user first checks the integrity of the platform using trusted computing platform (TCP) technology, as disclosed in WO 00/48063, the contents of which are incorporated herein by reference.

A user of a TCP is an entity that uses or intends to use an application on a TCP, where an application is a set of instructions executed on a computing platform.

A user makes integrity checks of an environment of a platform via a trusted device (TD) within the platform with which the user wishes to run an application. Assuming the user receives a satisfactory response, he is confident that he is interacting with a trusted platform with an environment which is trustworthy for his application.

For an entity of any kind (such as a computing platform, identity or service) to be trusted, in this context, means that a third party can have some level of confidence that the entity has a stated identity, is not subject to unauthorised modification, or both. In the case of a trusted device, this is achieved by physical and logical isolation from other functional elements of a computing platform - communication with the trusted device is controlled in such a manner that communications received by the trusted device will not subvert it and that communications received from the trusted device can themselves be trusted.

In terms of environment, it is intended to mean hardware configuration, active software and its configuration on a specific platform. Based on the results of the integrity checks, the user takes the decision of whether to run the application on the platform

However, problems arise in that the user cannot be certain whether the application continues to run within the same environment of the same platform or not throughout the run time of the application. Thus, the environment in which the user initially checked may change because the software configuration or use thereof may, for instance, change subsequent to the initial integrity check conducted by the user.

As a previous attempt at convincing a user that they are still communicating with the correct platform, it has been suggested that after the integrity checking of the platform all messages from the platform must be protected, for example with a signature signed by a TD within the platform. This approach allows the user to check if they are still in contact with the same platform, which may help them to know that their application is running on the same platform. This applies, in particular, if the application runs on a simple platform with only one application at a time, such as a mobile phone ,or a smart card, or a known restricted function platform, such as a server platform providing a specific service. However, this solution has disadvantages in that it cannot convince the user when using a platform that runs several applications simultaneously, some of which the user may not know well. Furthermore, this approach cannot convince the user that the environment in this kind of platform has not been changed during the running of the application.

Another attempt at providing a solution to the above mentioned problem has been the technique of using compartments in operating systems, which compartments may help the application to be less affected by the environment change, for example, in the case that each application is located in its own compartment of the platform. However, the problem still exists if the compartment(s) allow the inclusion of more than one application.

It is an object of the present invention to provide a fuller solution to the above stated problem than those provided by the above mentioned attempted solution.

According to a first aspect of the present invention a trusted computing platform (TCP) includes a trusted connection agent, operable to communicate with a user via a secure channel, and a trusted environment controller, operable to monitor events occurring within an environment of the TCP for changes in a level of trust in the environment, and is operable to protect sensitive data of the user in protected storage means of the TCP on detection of a change in the level of trust.

The trusted environment controller may be operable to detect a change in the level of trust in the environment due to an event or piece of code within the TCP.

The trusted environment controller may be operable to monitor changes in a level of trust caused by unverified or unidentified sources. Said unverified or unidentified sources may be code of an unknown or untrusted source. Trust may only be given if it can be positively proven.

The trusted environment controller may be operable to notify a user of a change in the level of trust via the trusted connection agent. The trusted environment controller may be operable to receive commands from the user to cause the end of a procedure, in particular if the level of trust changes.

Thus, a user's data is advantageously protected in the event that the level of trust on the TCP changes. Also, the user is advantageously given the option of continuing with the process at the new level of trust.

The events may be events of an operating system.

The sensitive data may be session relative information, a user's private data or other data which the user does not wish to be freely accessed.

The TCP may enclose a trusted environment, which may be controlled by the trusted environment controller. The trusted environment may include a trusted device (TD), the trusted connection agent, the trusted environment controller and one or more applications.

The trusted environment controller preferably communicates with the or each application to allow the protection of the sensitive data.

The trusted connection agent preferably communicates with the TD to allow integrity checking of the TCP by the user and to allow generation of a session key.

The trusted environment controller may be operable to issue a request for a command to a user on detecting a change in the level of trust. The command is preferably a command to proceed with the process or a command to abort the process and delete or protect any sensitive data of the user.

According to a second aspect of the present invention a method of monitoring a level of trust on a trusted computing platform (TCP) comprises monitoring events occurring within an environment of the TCP for changes in a level of trust with a trusted environment controller and protecting sensitive data of a user in protected storage means of the TCP on detection of a change in the level of trust.

As part of an initial connection protocol, which may be a session key generation, the TCP may provide a signature signed by a TD of the TCP, to assure the user that he is communicating with the intended TCP.

On detection of a change in the level of trust the trusted environment controller may offer a user the choice of continuing with the process in which the change of trust has occurred or aborting the process. Aborting the process may involve ending a session with the TCP and/or may involve deleting the sensitive data. The trusted environment controller may communicate with the user via a trusted connection agent of the TCP.

According to a third aspect of the present invention a trusted environment controller for a trusted computing platform, in which the trusted environment controller is operable to monitor events occurring within an environment of a trusted computing platform and is operable to protect sensitive data of a user of the trusted environment controller on detection of a change in the level of trust.

The trusted environment controller may be operable to communicate with the user, preferably via a trusted connection agent, to obtain a command to proceed with a process having a changed level of trust or to abort the process.

All of the features described herein can be combined with any of the above aspects, in any combination.

Specific embodiments of the present invention will now be described, by way of example, with reference to the accompanying drawings, in which:

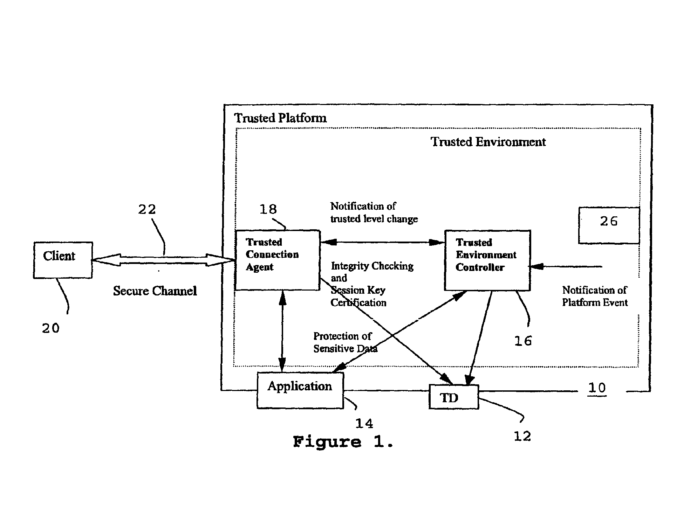

Figure 1 is a schematic diagram of apparatus for locking an application within a trusted environment.

Figure 1 shows an arrangement and interconnection of apparatus for locking an application within a trusted environment. A trusted computing platform (TCP) 10 comprises a trusted device (TD) 12, an application 14, a trusted environment controller 16 and a trusted connection agent 18, the latter communicating for the trusted platform with a user 20 via a secure channel 22.

With the arrangement shown in Figure 1 the user 20 can establish communication with the application 14 running on the TCP 10 and ensure that the TCP 10 environment is trustworthy for this application. The user 20 and the application 14 need a secure channel 22 for their communication and a shared session key protects this secure channel 22. The process of session key generation must guarantee to the user that he is communicating with the expected platform via a signature from the TD 12. The user 20 can also check that the environment is trusted as claimed by performing an integrity challenge. Such a challenge and response process for checking integrity of the TCP is that as described in WO 00/48063 mentioned above. It is important to add the trusted device signature, because the generation of a session key, e.g. by a Diffie-Hellman exchange only cannot prevent an attacker interposing between the user and the TCP 10 in the generation of the session key in order to obtain access to the communication channel between the user 20 and the TCP 10. The use of the signature avoids such a possibility and gives confidence in the secure channel.

Once the user 20 has established communication with the TCP 10 and ensured that it is in a trustworthy environment for the intended use, he must be convinced that the application 14 runs in a trusted environment throughout the duration of its lifetime. This can be achieved via the trusted environment within the TCP 10 performing any of several actions prior to a change in its level of trust.

This action is performed by the trusted environment controller 16 which will normally do the controlling of the trusted environment without recourse to the user 20, except in extreme circumstances. The trusted environment controller may offer the following options.

Firstly, in a full service mode, sensitive information used in an application 14 (such as session relative information or a user's private data) running in the environment can be protected so that it is no longer accessible when the level of trust on the TCP 10 changes. The sensitive information can be protected by e.g. stopping the process, deleting or removing data to a secure position 26 (in order to protect the data), or alternatively the session key could be removed, thereby closing the secure channel 22.

Secondly, in a partial service mode, the user 20 can be notified of the change in trust level, whereupon he can decide what action to perform (for example proceed with a session, terminate the session, do further integrity checks of the TCP 10 etc). The trusted environment controller 16 would guarantee receipt of this notification by the user 20, either implicitly or explicitly. The trusted environment controller 16 would also optionally act on the behaviour of the application 14 or other applications. Once the user 20 has made a decision upon the action to be taken, the private information, held by the protected storage facilities within the TCP 10 could optionally be recovered. The private information may also be held in an encrypted form outside the TCP 10.

The control of the application within the trusted environment in terms of the options given to the user 20 is provided by the trusted environment controller 16. It is the trusted environment controller 16 that informs the user 20, via the trusted connection agent 18 that the level of trust on the TCP 10 has changed.

An alternative to direct communication with the user 20 is for the user 20 to initially provide a policy to the TCP 10 to specify levels of trust with which the user is happy to communicate. Then, although the trusted environment controller may detect a change in the level of trust on the TCP 10 it may not be necessary to contact the user 20 and inform them of the change in the level of trust if that change in the level of trust does not fall below the level specified in the policy provided by the user 20. The trusted environment controller also protects the user's sensitive information as set out above.

The TCP 10 described herein provides a solution for a user 20 to lock an application 14 within a trusted environment of the TCP 10, together with the possibility of offering the user 20 evidence as to whether the trusted environment in the TCP 10 has changed during the running of the application.

In effect the user relies on the TCP 10 to act as its policy indicated during the normal procedure of the trusted computing platform technology.

The system described herein advantageously allows the detection of changes in a level of trust arising from a piece of mobile code for example or a piece of code already stored in the trusted environment. Thus the change results from within the trusted environment. The system also allows a change in a level of trust due to an unidentified or unverified source arising from outside the trusted environment or within the trusted environment. Functions and environments within the platform are also protected from viruses or similar data from outside the trusted environment. The invention goes beyond a simple comparison of incoming data with a set of known viruses or the like; in the invention a change in trust level of any origin is detected and acted on, even when the source of the change is not known, or has not previously been indicated as a potential virus or the like.

The remaining connections between the various components in the TCP 10 are those usual to a trusted platform in that all parts connect with a trusted connection agent 18 to communicate with the user 20 outside of the TCP 10. Also, the trusted connection agent and the application 14 communicate with one another as does the TD 12 with a trusted connection agent in order to allow the user 20 to check the integrity of the TD 12 involved in session key generation. Furthermore, the application 14 communicates with the trusted environment controller as does the TD 12 and of course the trusted connection agent 18. Furthermore, the trusted environment controller 16 receives notification from the operating system of the various events that may affect the level of trust within the TCP 10. Such a notification is then passed to the trusted connection agent 18 for transmission on to the user by the secure channel 22, where appropriate.

It should be appreciated by the person skilled in the art that the method and apparatus for locking an application within a trusted environment has been described in relation to the trusted computing platform technology disclosed in WO 00/48063. However, this trusted platform is only used as one example of a variety of different trusted platforms with which the present invention could be used to provide the level of security and information required by the user.

## Claims

1. A trusted computing platform (TCP) (10) includes a trusted connection agent (18), operable to communicate with a user via a secure channel (22), and a trusted environment controller (16), operable to monitor events occurring within an environment of the TCP (10) for changes in a level of trust in the environment, and is operable to protect sensitive data of the user in protected storage means (26) of the TCP (10) on detection of a change in the level of trust.

2. A trusted computing platform as claimed in claim 1, in which the trusted environment controller (16) is operable to detect a change in the level of trust in the environment due to an event or piece of code within the TCP (10).

3. A trusted computing platform as claimed in claim 1, in which the trusted environment controller (16) is operable to monitor changes in a level of trust caused by unverified or unidentified sources.

4. A trusted computing platform as claimed in any preceding claim, in which the trusted environment controller (16) is operable to notify a user of a change in the level of trust via the trusted connection agent (18).

5. A trusted computing platform as claimed in either claim 1 or claim 2, in which the trusted environment controller (16) is operable to receive commands from the user to cause the end of a procedure, in particular if the level of trust changes.

6. A trusted computing platform as claimed in any preceding claim, in which the sensitive data is session relative information, a user's private data or other data which the user does not wish to be freely accessed.

7. A method of monitoring a level of trust on a trusted computing platform (TCP) (10) comprises monitoring events occurring within an environment of the TCP (10) for changes in the level of trust with a trusted environment controller (16) and protecting sensitive data of a user in a protected storage means (26) of the TCP (10) on detection of a change in the level of trust.

8. A method of monitoring as claimed in claim 11, in which as part of an initial connection protocol the TCP (10) provides a signature signed by a trusted device (TD) (12) of the TCP (10), to assure the user that he is communicating with the intended TCP (10).

9. A trusted environment controller (16) for a trusted computing platform (10), in which the trusted environment controller (16) is operable to monitor events occurring within an environment of a trusted computing platform (10) and is operable to protect sensitive data of a user of the trusted environment controller (16) on detection of a change in the level of trust.

10. A trusted environment controller (16) as claimed in claim 9, which is operable to communicate with the user to to obtain a command to proceed with the process having a changed level of trust or to abort the process.
